# EUROPEAN PATENT SPECIFICATION

(11) **EP 1 668 513 B1**
(45) Date of publication and mention of the grant of the patent: **21.08.2013**
(21) Application number: 04779845.9
(22) Date of filing: 30.07.2004
(51) Int. Cl.: G06F 12/08, G06F 9/38, G06F 15/78

(54) **Cache bank interface unit**
Cache-Bank-Schnittstelleneinheit
Unité d'interface pour banque d'antémémoire

(30) Priority: 19.08.2003 US 496602 P; 26.05.2004 US 855658
(43) Date of publication of application: 14.06.2006
(73) Proprietor: Oracle America, Inc., Redwood City, CA 94065 (US)
(72) Inventor: OLUKOTUN, Kunle, A., Stanford, CA 94305 (US)
(74) Representative: Harris, Ian Richard
(86) International application number: PCT/US2004/024911
(87) International publication number: WO 2005/020080

(56) References cited:
- WO-A-03/036482
- US-A- 5 526 510
- US-A1- 2002 188 807
- US-B1- 6 480 927

## Description

### BACKGROUND OF THE INVENTION

### 1. Field of the Invention

This invention relates generally to servers and more particularly to a processor architecture and method for serving data to client computers over a network.

### 2. Description of the Related Art

With the networking explosion brought along with introduction of the Internet, there has been a shift from the single thread desktop applications for personal computers to server applications that have multiple threads for serving multiple clients. Electronic commerce has created a need for large enterprises to serve potentially millions of customers. In order to support this overwhelming demand, the serving applications require different memory characteristics than the memory characteristics for desktop applications. In particular, the serving applications require large memory bandwidth and large cache memory requirements in order to accommodate a large number of clients.

In addition, conventional processors focus on instruction level parallelism. Therefore, the processors tend to be very large and the pipeline is very complex. Consequently, due to the complexity of the pipeline for processors, such as INTEL processors, only one core is on the die. Accordingly, when there is a cache miss or some other long latency event, there is usually a stall that causes the pipeline to sit idle. Serving applications are generally constructed to be more efficient with very little instruction level parallelism per thread. Thus, the characteristics of implementation for conventional processors with the application of serving workloads result in a poor fit since conventional processors focus on instruction level parallelism.

Additionally, the performance of processors based on instruction level parallelism (ILP), as a function of die size, power and complexity, is reaching a saturation point. Conventional ILP processors include well known processors from the PENTIUM(TM), ITANIUM(TM), ULTRASPARC(TM), etc., families. Thus, in order to increase performance, future processors will have to move away from the traditional ILP architecture.

WO03/036482 discloses a processor that includes at least two cores, where each of the cores includes a first level cache memory. Each of the cores is multi-threaded. A plurality of cache bank memories in communication with the cores through a crossbar is provided. Each of the plurality of cache bank memories is in communication with a main memory interface. US 2002/188807 discloses a system that facilitates flow control to support pipelined accesses to a cache memory.

In view of the forgoing, there is a need for a processor having an architecture better suited for serving applications in which the architecture is configured to exploit multi-thread characteristics of serving applications.

### SUMMARY OF THE INVENTION

The invention is defined in the claims. Broadly speaking, the present invention fills these needs by providing a processor having an architecture configured to efficiently process server applications. It should be appreciated that the present invention can be implemented in numerous ways, including as an apparatus, a system, a device, or a method. Several inventive embodiments of the present invention are described below.

In one embodiment, a processor chip is provided. The processor chip includes a plurality of processing cores, where each of the processing cores are multi-threaded. A plurality of cache bank memories are included. Each of the cache bank memories include a tag array region configured to store data associated with each line of the cache bank memories. A data array region configured to store the data of the cache bank memories is included in the cache bank memories. An access pipeline configured to handle accesses from the plurality of processing cores is included in the cache bank memories as well as a miss handling control unit configured to control the sequencing of cache-line transfers between a corresponding cache bank memory and a main memory. The processor chip includes a crossbar enabling communication between the plurality of processing cores and the plurality of cache bank memories. A plurality of input/output (I/O) interface modules are in communication with a main memory interface and provide a link to the plurality of processing cores, the link bypassing the plurality of cache bank memories and the crossbar.

In yet another embodiment, a server is provided including such a processor chip as an application processor chip.

Other aspects and advantages of the invention will become apparent from the following detailed description, taken in conjunction with the accompanying drawings, illustrating by way of example the principles of the invention.

### BRIEF DESCRIPTION OF THE DRAWINGS

The present invention will be readily understood by the following detailed description in conjunction with the accompanying drawings, and like reference numerals designate like structural elements.

FIG. 1 is a schematic diagram of a processor chip having 4 sets of 8 multi-threaded processor cores in accordance with one embodiment of the invention.

FIG. 2 is an alternative schematic representation of the multi-threaded multi-core processor chip of FIG. 1.

FIG. 3 illustrates the subsystems of a cache bank interface unit in accordance with one embodiment of the invention.

FIG. 4 is a simplified schematic diagram of the Input/Output (I/O) port configuration in accordance with one embodiment of the invention.

FIG. 5 illustrates an exemplary Input timeline for the use of the I/O port interface in accordance with one embodiment of the invention.

FIG. 6 illustrates an exemplary Output timeline for the use of the I/O port interface in accordance with one embodiment of the invention.

### DETAILED DESCRIPTION OF THE PREFERRED EMBODIMENTS

An invention is described for a layout configuration for a cache bank interface unit and an Input/Output Interface unit for a multi-thread multi-core processor. It will be obvious, however, to one skilled in the art, that the present invention may be practiced without some or all of these specific details. In other instances, well known process operations have not been described in detail in order not to unnecessarily obscure the present invention.

The embodiments described herein define an architecture for multiple simple cores on a chip, where each of the cores have their own first level cache and the cores share a second level cache through a crossbar. Additionally, each of the cores have two or more threads. Through multi-threading, latencies due to memory loads, cache misses, branches, and other long latency events are hidden. In one embodiment, long latency instructions cause a thread to be suspended until the result of that instruction is ready. One of the remaining ready to run threads on the core is then selected for execution on the next clock (without introducing context switch overhead) into the pipeline. In one embodiment, a scheduling algorithm selects among the ready to run threads at each core. Thus, a high throughput architecture is achieved since the long latency event is performed in the background and the use of the central processing unit is optimized by the multiple threads. Therefore, the embodiments described below provide exemplary architectural layouts for handling the bandwidth demanded by the multi-thread multi-core configuration.

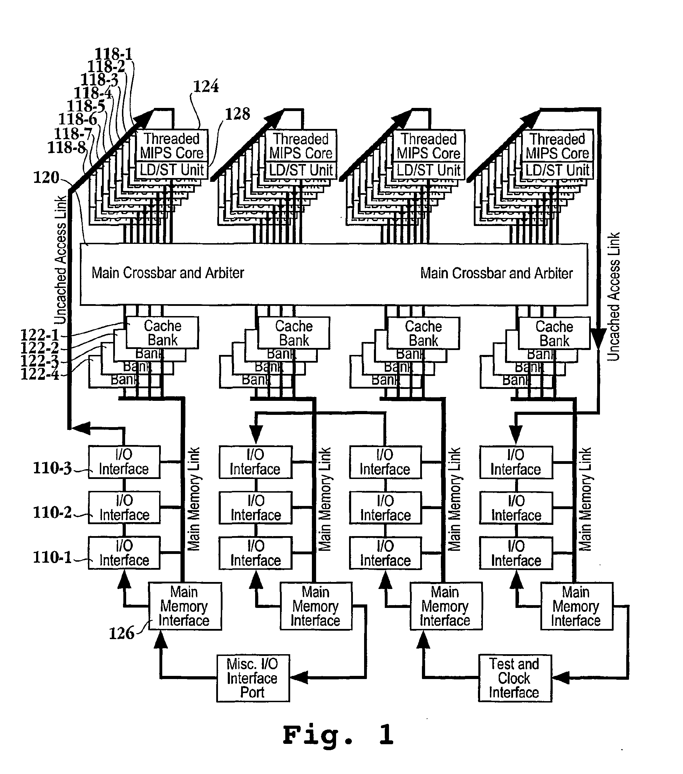

Figure 1 is a schematic diagram of a processor chip having 4 sets of 8 multithreaded processor cores in accordance with one embodiment of the invention. Threaded cores 118-1 through 118-8 make up the first set of 8 cores of the chip. Each of threaded cores 118-1 through 118-8 include level 1 cache 124. Level 1 cache 124 includes instruction cache (I$) segment and data cache (D$) segment. Load/Store unit 128 is included within each of threaded cores 118-1 through 118-8. It should be appreciated that each of processor cores on the chip include an instruction cache, a data cache and a load store unit. Additionally, processor cores 118-1 through 118-8 are discussed for exemplary purposes, however, the discussion is applicable to all the cores illustrated in Figure 1. In one embodiment, the load/store unit architecture is similar to that of reduced instruction set computer (RISC) architecture. Of course, the multithreading aspects of the present invention were not accommodated by the RISC architecture. In another embodiment, each of the processor cores are based upon SPARC^{™} technology of the assignee of the invention. Each processor core 118-1 through 118-8 is in communication with crossbar and arbiter 120. Crossbar 120 is optimized for processor traffic where it is desirable to obtain extremely low latency. Level 2 (L2) cache banks 122-1 through 122-4 are shared by processor cores 118-1 through 118-8. It should be appreciated that by sharing L2 cache banks 122-1 through 122-4 allows for concurrent access to multiple banks at the same time, thereby defining a high bandwidth memory system. In one embodiment, each of L2 cache banks have a size of about 1 megabyte (MB). It should be appreciated that while four L2 cache banks 122-1 through 122-4 are shown in Figure 1, the invention is not limited to four L2 cache banks. That is, the number of L2 cache banks is sufficient to provide enough bandwidth from the L2 cache to keep all of the threads busy. In one embodiment, each processor core includes 4 threads. Thus, a single processor chip with eight cores will have 32 threads in this configuration. Each L2 cache bank 122-1 through 122-4 is in communication with main memory interface 126 through a main memory link in order to provide access to the main memory. It should be appreciated that while 8 cores are depicted on the processor chip, more or less cores can be included as the Figure 1 is exemplary and not meant to be limiting.

Still referring to Figure 1, main memory interface 126 is in communication with input/output (I/O) interface blocks 110-1 through 110-3 which provide uncached access to the threaded cores through the uncached access link. Thus, processor cores 118-1 through 118-8 are enabled to directly access a register in any of I/O devices through I/O interfaces 110-1-110-3 instead of communicating through the memory. It should be appreciated that the I/O interface blocks, main memory interface blocks, miscellaneous I/O interface port block, and test and clock interface block also drive off-chip pins.

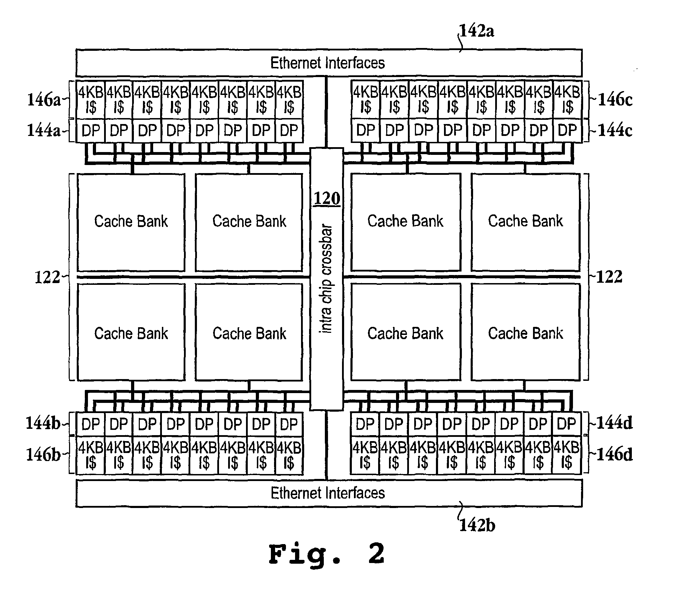

Figure 2 is an alternative schematic representation of the processor chip of Figure 1. Here, crossbar 120 is in communication with data pathways 144a-144d, and L2 cache banks 122. It should be appreciated that only 2 sets of cache banks 122 are shown due to limitations of illustrating this configuration in two dimensions. Two additional cache banks are provided, but not shown, so that each data pathway 144a-144d is associated with a cache bank. Ethernet interfaces 142a and 142b provide access to a distributed network. In one embodiment, Ethernet interfaces 142a and 142b are gigabit Ethernet interfaces. Level one cache memories 146a-146d are provided for each of the processor cores associated with data pathways 144a-144d.

It should be appreciated that the processors of Figures 1 and 2 issue approximately 10-12 data memory references per cycle into the main cache memory of the chip, along with the occasional local instruction cache miss. Because of the large number of independent 64-bit accesses that must be processed on each cycle, some sort of crossbar mechanism must be implemented between the individual processors and the 16 independently accessible main cache banks. This logic will utilize many long wires, large multiplexers, and high-drive gates. Making matters worse, it will probably be difficult to efficiently pipeline this huge structure, so large chunks of it will have to operate in a single cycle.

At each of the 16 cache banks on the chip of Figure 1, is a control unit that attempts to process references from the processor cores and controls the line-refill process when a cache miss occurs. The processing of the references and the line refill process are two operations that occur somewhat independently from each other. Thus each operation is separately described below. The embodiments described below examine several different configuration options, as well as their key constituent components, for handling the arbitration of the multiple requests from input units.

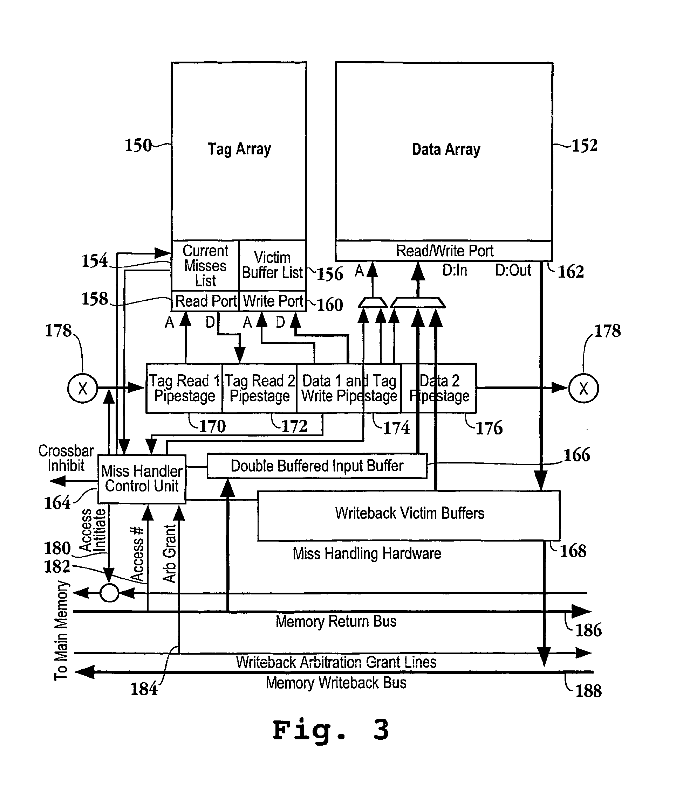

Figure 3 illustrates the subsystems of a cache bank interface unit in accordance with one embodiment of the invention. Tag array 150 is a dual-ported memory (one read, one write) containing several bits of information for each line in the cache. Table 1 illustrates exemplary bit information for each line of the cache.

**TABLE 1**

| **FIELD NAME** | **Bit Width** | **Notes** |
|---|---|---|
| Valid Bit | 1 | Is line used at all? |
| Used Bit | 1 | Has this line been accessed yet? This is set when a line enters the cache, and reset after its first use. The line is considered "locked" until it is clear. It guarantees that each line is accessed at least once, preventing deadlocks. |
| Dirty Bit | 1 | Has the line been written by a store? |
| Locked Bit | 1 | Can this line be removed from the cache? This is used by CLCK/CUNL to lock lines permanently. |
| LRU Data | | Exact content may vary |
| Line Tag | 20-44 | Excess physical address bits beyond cache index and line offset. May vary depending upon associativity and length of the physical address provided. |

Continuing with Figure 3, Current Misses List 154 is a temporary staging buffer that holds the tag data for any references that are currently waiting to be fetched from the main memory. Current Misses List 154 is accessed along with the tags, and also functions like a conventional Miss Status Handling Register (MSHR), under the control of Miss Handler Control Unit 164. Victim Buffer List 156 is a temporary staging buffer that acts as an opposite of Current Misses List 154. That is, Victim Buffer List 156 holds the tags for lines that are on the way out of the cache bank, and are currently sitting in the Writeback Victim Buffers 168, waiting to go to main memory. Similar to Current Misses list 154, Victim Buffer List 156 acts as both tag extension and MSHR-like control register. Each entry in Victim Buffer List 156 list holds the tag data for a data buffer in the Writeback Victim Buffers 168. Data array 152 is a large, single ported memory array containing the actual data held by the cache bank. In one embodiment, Data array 152 is 64 kilobytes with a 16-way, 1 megabyte setup.

The access pipeline consists of the following pipeline stages: Tag read 1 stage 170, Tag read 2 stage 172, Data 1 and tag write stage 174, and Data 2 stage 176. The access pipeline is a processor-style pipeline that is configured to handle accesses from the processor cores. Each of the stage are described in more detail below. Miss Handler Control Unit 164 controls the sequencing of cache-line transfers between the cache bank and main memory. Miss Handler Control Unit 164 manages Input buffer 166 and Writeback Victim buffers 168, sends access requests to the memory interface unit, and maintains both Current Misses list 154 and Victim Buffer list 156 coherently. Further functionality for Miss Handler Control Unit 164 is described in more detail below. Input Buffer 166 is a buffer that collects cache lines returned from memory. In one embodiment, Input Buffer 166 is a double buffer that collects cache lines returned from memory, 64 bits at a time, until a complete cache line is formed. Input Buffer 166 then holds the cache line until a cycle is scheduled to write the newly recovered line into data array 152. These cycles may be extended somewhat to handle the alternate no-retry-on-store policy, described in more detail below.

Still referring to Figure 3, Writeback Victim Buffers 168are a set of buffers containing all of the dirty lines that have been forced out of the data array by cache replacements that are waiting to be flushed out to main memory. Writeback Victim Buffers 168 double as victim buffers, and must return lines to data array 152 if the lines are accessed again before they are flushed to main memory. Because of this functionality, overwritten lines (clean ones that have been forced out) can optionally be stuck into leftover slots that are not being used for writebacks, to be held in reserve in case the overwritten lines happen to be accessed again soon.

As the pipeline diagram of Figure 3 implies, each memory access consists of a tag access followed by a subsequent data access on a hit or if an old, dirty line needs to be recovered for writeback purposes before the cache miss can be handled. In parallel with the data access, the tag array is updated with any changes of status (primarily, to LRU control bits). The configuration of Figure 3 suggests a timing of two cycles for each of these accesses, but this may vary depending upon the implementation of the cache itself. These accesses are serialized tag-before-data for several reasons. First, reads and writes are allowed to use the same access pipeline without special delay mechanisms for writes. Second, a highly associative cache is enabled to be built without requiring that all ways of the cache be read out at once during each read. Instead, the hit/miss determination is made for all ways at once, and then only the winner needs to be accessed. This allows a significant power and access-port reduction with highly associative caches that may be critical on such a large cache that will be handling so many references.

The actual access pipeline is a real, processor-style pipeline. References come in from crossbar 178 on the left, flow through the pipeline left-to-right, and then pass back out into the crossbar a fixed number of cycles later, whether or not there is a cache miss. Depending upon the access times of the tag array 150 and data array 152, additional delay pipeline stages may need to be inserted between the head and tail stages of the two halves of the access pipeline. Similar to a processor pipeline, full "forwarding" paths are implemented between the various stages. These may be used when one access reads tags or data that are being modified by a reference in a later stage. The various stages of the access pipeline will now be described.

During Tag Read 1 stage 170, the index portion of the access address is used to look up the tags associated with the line's set. In parallel with the lookup in the full tag array, the Current Misses List and Victim Buffer List are also referenced to see if the line happens to be already coming in (due to another recent cache miss to it) or is in the process of being sent out of the cache bank following an eviction. During Tag Read 2 stage 172 (also referred to as last tag stage), the results of the tag access are returned and checked for hits in the tags or lists. Any modifications to the existing tag are made (mostly to the used and LRU bits). Alternatively, a new tag is synthesized for an incoming line. If a dirty line is being discarded (or a clean one is going to be saved in victim buffer list 156 through write port 160), then the tag of the line to be discarded is saved for use during the main memory access (or in the alternative, just to keep the tag).

Continuing with the access pipeline, Data 1 and Tag Write stage 174 updates tag array 150 and its two associated lists 154 and 156 (these after a cache miss only). The updates are sent off at the beginning of this cycle in one embodiment. If a miss has occurred Miss Handler Control unit 164 is notified that a new miss has been added to its list of duties, simultaneously. Meanwhile, the read from a line that has been hit, store of new data, or read-out of the entire line targeted for flushing is initiated. Data 2 stage 176 (also referred to last data stage) accomplishes the following functionality: Following a load, the appropriate word is prepared for its trip back into crossbar 178. Following the read-out of a victim line, the entire line is moved into Writeback Victim Buffers 168. Following any access, an indication of whether the access hit or missed in the cache is returned, so that the load/store unit that initiated the access knows whether or not the reference has completed. References that do not complete are then retried by the load/store unit until they do complete. Possible exceptions to this retry include stores, cache locks, and cache flushes, if the alternate "return receipt" technique is used.

While the above operations summarize the basic functionality of the various pipe stages, some variations occur when more unusual access control commands are sent across with the reference as will be discussed here. When any synchronization instruction is processed, the pipeline is reserved for two cycles (or more) for that access instead of just one. During the first cycle, the "load" half of the primitive is executed, loading the current data in the address of the reference. During the second cycle (or last, if more than two are required), the new value is stored into the address. If the instruction specifies more than just a simple load-store exchange, then logic built into the pipeline performs the necessary mathematical operations (comparison, addition, etc.) and generates both the value to be stored and a return value that will go back to the processor. A simple load-store exchange primitive only requires two cycles, but more complex primitives may require more cycles in order to allow time for the result of the load to be forwarded back to Data 1 and Tag Write stage 174 from Data 2 stage 176.

Another unusual access control command may include the I-cache refill. This instruction causes the pipeline to initiate a sequence of word-size accesses in succession over 8/16 clock cycles, provided instruction hits. If the instruction misses, then the miss notification is sent back during the first cycle and the remaining 7/15 cycles are wasted (since they were already reserved by the arbiter). During the tag stages, a Cache Lock instruction acts like a load instruction. During the data stages, however, the Cache Lock instruction works differently. The tag that is written back bas its "'locked" bit set, and no data access is initiated in any case. At the end of the pipeline, no data is returned (similar to a store reference). A Cache Unlock instruction acts like the cache lock instruction, except that it clears the "locked" bit of a cache line instead of setting it. Also, this operation always signals a "hit," whether or not a cache hit actually occurs. It should be appreciated that no refill operation is ever attempted following a cache miss. A Cache Invalidate instruction acts like the cache unlock instruction, except that it unconditionally clears the "valid" bit of the cache line in addition to the "locked" one. A Cache Invalidate instruction also always indicates that a hit has occurred. A Cache Flush instruction acts like a cache invalidate instruction, except that it initiates a normal writeback-to-memory cycle if a hit is made to a dirty line. Unlike any other cache control instruction, the Cache Flush instruction returns a "miss" signal until the line is completely eradicated from the cache bank, i.e., gone from the cache itself and the input/output buffers. It should be appreciated that this operation is fairly extreme, and the opposite of a normal hit. This ensures that no SYNC will be passed until the cache line has been forced completely out to main memory.

Miss handling controller unit (MHCU) 164 of Figure 3 is invoked whenever cache misses occur. The access pipeline adds lines to Current Misses List 154 following all cache misses, and to Victim Buffer List 156 following the ejection of a dirty line from the cache to Writeback Victim Buffers 168. MHCU 164 is notified about all of these additions so that it may respond by recording them on a small internal queue that buffers requests before sending them off to the main memory interface. The access pipeline may also add an entry to Victim Buffer List 156 following the ejection of a clean line, if the optional technique of using extra Writeback Victim Buffer entries as purely victim buffers is used. However, MHCU 164 is not notified about these lines, since MHCU ignores them. If the optional "return receipt" technique is used, then MHCU 164 also performs flow control. If there is even a possibility of running out of entries in either list, considering the number of pipeline stages between cache back arbitration and Data 1 and Tag Write stage 174 (probably about 5-6), then MHCU 164 raises its "crossbar inhibit" signal to prevent further accesses from any processor. This requires that many buffers be reserved for the very rare case of many cache misses in a row (although the spare Victim Buffers can be used to hold clean lines, at least). In the more conventional situation, with retries, accesses that miss in the cache and try to add an entry to a full list will simply fail without triggering a reference to main memory. Later, after the lists empty out somewhat, a retry will still miss, but will finally initiate the necessary main memory access.

After MHCU 164 has been handed one or two main memory requests following a cache miss, it controls the main memory access. First, it sends the access(es) off to main memory as soon as possible over Access Initiation bus 180 of the main memory link. MHCU 164 then watches access control line 182 and arbitration grant line 184 of Memory Return Bus 186 and/or Memory Writeback Bus 188, as is appropriate. For writebacks, MHCU 164 performs a 16- cycle dump of the cache line from the appropriate victim buffer to Memory Writeback Bus 188 when granted access to that bus. Following the dump, MHCU 164 updates the status of that line in Victim Buffer List 156 to the "clean" state, so that it may be overwritten by subsequent writebacks. For lines recovered from memory, the sequence is slightly more complex. Here, one of two alternating double buffers is selected to accept the line as it is returned on Memory Return Bus 186 over a 16-cycle period. After the line has been received, MHCU 164 raises its "crossbar inhibit" signal for a single cycle, guaranteeing that one cycle with no accesses from processors will occur before the second buffer can be filled up, 16 cycles later. When this processor-free cycle occurs, MHCU 164 inserts a special "instruction" into the access pipeline that updates tag array 150 (with the tag information from Current Misses List 154) and data array 152 (with the newly arrived line). Meanwhile, the old entry on Current Misses list 154 is eliminated. After this special "instruction" has been processed, the cache will be ready to handle further accesses to the line.

It should be appreciated that it is possible to build a version of this system that doesn't require the processor to retry stores with a small tweak of the design. Specifically, the double-buffering at the input changes into a full set of buffers that can hold all pending incoming lines simultaneously. The LD/ST units on each core are responsible for simultaneously buffering and tracking multiple loads and stores from all of the different threads within the core. The exact number of loads and stores that can be simultaneously processed may be determined following simulation of the architecture, to find the proper trade-off between silicon area consumed and performance. Byte-by-byte write masks must also be associated with each of these line buffers. As stores are performed that miss in the cache, they are written into these buffers instead, and the associated bits in the write mask are set. When the cache line returns from main memory, any bytes that have already been written by stores are not overwritten with the old data from main memory, simulating the overwrites by the stores. Meanwhile, the memory interface unit must send out a return receipt using the uncached access link to notify the processor that its store has completed. It will be apparent to one skilled in the art that this technique saves crossbar bandwidth and reduces store latencies, but requires larger cache bank input buffers and a higher-bandwidth uncached access link. Thus, there is a balance to be struck when considering these design implications.

In one embodiment, around the edge of the multi-chip processor are 10 full-duplex Gb/s bandwidth "serial" ports, each actually implemented as a pair of 125 MHz 8-bit parallel data ports plus control signals. Of course, any suitable number of ports may be included here, and ten ports are mentioned for exemplary purposes only. These ports may be used to interface directly to high-bandwidth I/O interconnect such as Gigabit Ethernet or an ATA hard drive port. On-chip, these are controlled by a unit with many similarities to the cache bank interface unit described above as well as some differences, too.

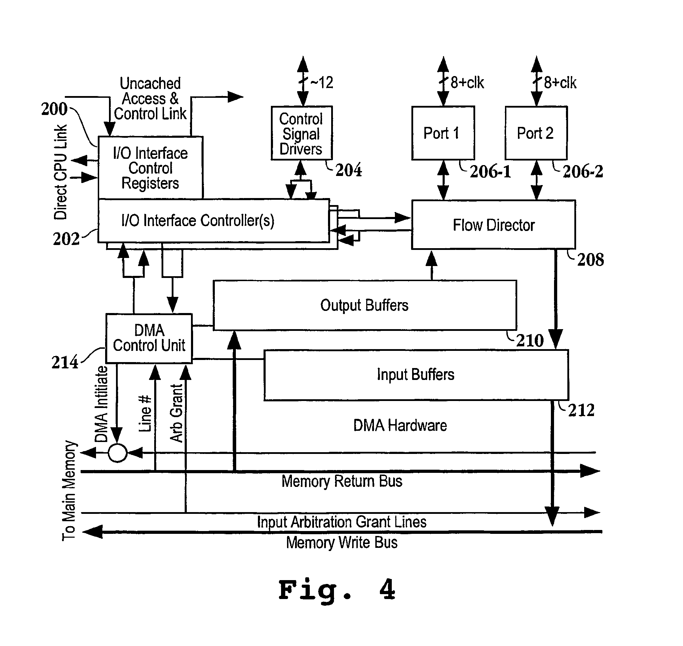

Figure 4 is a simplified schematic diagram of the Input/Output (I/O) port configuration in accordance with one embodiment of the invention. The central part of each I/O port is its set of control registers 200, which provide a standard interface between the specialized I/O interface components, e.g., I/O interface controller 202, and the rest of the chip. This set of generic registers 200 may be read or written through uncached memory accesses. Alternatively the registers may be read or written through direct coprocessor reads and writes from a nearby processor core. The programmable functionality of the different I/O interface controllers 202, control of the DMA control unit 214, etc. are done through reads and writes to registers 200. Similarly, interrupt requests from the I/O interfaces may be sent to a processor core via a special "uncached access" message (that can go to any processor that wants it) or (optionally) by directly pulling an interrupt line to a nearby processor. It should be noted that the direct connections will be more difficult to implement correctly, since care would have to be taken to avoid the accidental creation of critical paths in the core logic. However, these connections (especially the interrupt one) may be necessary in order to keep interrupt latencies low enough for proper I/O response. Thus, during the writing of the kernel interrupt handler and the associated device drivers these determination may be made.

Still referring to Figure 4, the I/O direct memory access (DMA) of the I/O interface is very similar to the MHCU unit in the cache bank interfaces with reference to Figure 3. Both of DMA control unit 214 and the MHCU send read and write requests for cache lines down virtually identical main memory links to a main memory interface. These units also manage several buffers that hold cache lines waiting to go to main memory or lines that have just come from main memory. There are several differences, however. First, each DMA control unit 214 may be attached to more than one main memory link (although only one is shown in Figure 4 for illustrative purposes). This is not absolutely required, but is necessary if I/O buffers 210 and 212 contain lines from more than one bank, which may be likely. Second, each DMA control unit 214 controls two full sets of buffers 210 and 212 (simply double-buffering the output buffers probably will not work as well as it did with the cache banks as described above). Third, each DMA control unit 214 manages buffers 210 and 212 (usually) in a simple, circular manner. As input buffers 212 fill and output buffers 210 drain under the control of the I/O Flow Director208, DMA accesses are initiated to drain / fill more buffers. Instead of complex reference tracking mechanisms, the management is done using 2 (or more, for flexibility) DMA address generation engines in DMA control unit 214. Under register control, these simply step through memory, generating a sequence of main memory references to store input or retrieve output.

For the off-chip I/O interface, this external interface will support Gigabit Ethernet with an integrated MAC that can connect through an MII pin interface to an industry-standard PHY chip for full-duplex transmission, in one embodiment. It should be appreciated that this requires about 30 pins (16 data, a data clock for each port, and 12 or so control lines). While this will work for attaching to Ethernet-based systems, support for other interfaces (particularly disk ones, should a multi-core processor be made with a disk in the same cabinet) may become necessary. For example. EIDE/ATA or SCSI are the most likely possibilities for direct connection of fast yet cheap hard drives, although others might be possible in the future. It should be appreciated that hardware to support further types of interfaces may be included, as well. Each interface will mostly consist of logic that controls Flow Director 208 of the I/O interface of Figure 4 to route the generic data-stream provided by the DMA interface logic to data I/O ports 206-1 and 206-2 according to the protocols of each particular I/O mechanism. Of course, all of these will also require specialized control logic in order to synthesize the control signals and protocols associated with each type of interface (e.g. Ethernet, PCI, EIDE/ATA, etc).

When all of the elements of the I/O interface function are assembled together, they allow I/O transactions to occur under the control of software device drivers running on one of the processors (or any processor, if no direct connections between the I/O devices and particular processors exist). As is described below, both input and output transactions consist of three main stages, i.e., Setup stage, Send/Receive stage, and Cleanup stage.

In the Setup stage, the processor configures the interface to send or receive data in the appropriate manner, using the control interface and registers. Before each transaction, the processor also programs the DMA controller with the location of the data buffer in main memory that the transaction will use. For output transactions, the length of the packet or block will be programmed, as well. In the Send/Receive stage, the data flows between one of the I/O data ports and main memory, with the port flow director and DMA control unit directing the traffic based on their preprogrammed setup information. It should be noted that this step occurs in the background, without any processor intervention. In the Cleanup stage the port sends an interrupt to the processors, invoking an I/O handler. Following an input, the I/O handler may start processing the data that has been brought into the multi-core system. On either type of transaction, the I/O handler also forces the processor to set the interface up for the next transaction. These three steps are simply repeated for any particular interface. Because of the latency of the interrupt/setup cycle, each DMA controller may have its control buffer registers at least double-buffered so back-to-back input or output transactions are possible. It will be apparent to one skilled in the art that depending upon the interrupt latency, even more sophisticated sets of DMA control registers may be necessary to allow the I/O device drivers to stay ahead of the interface.

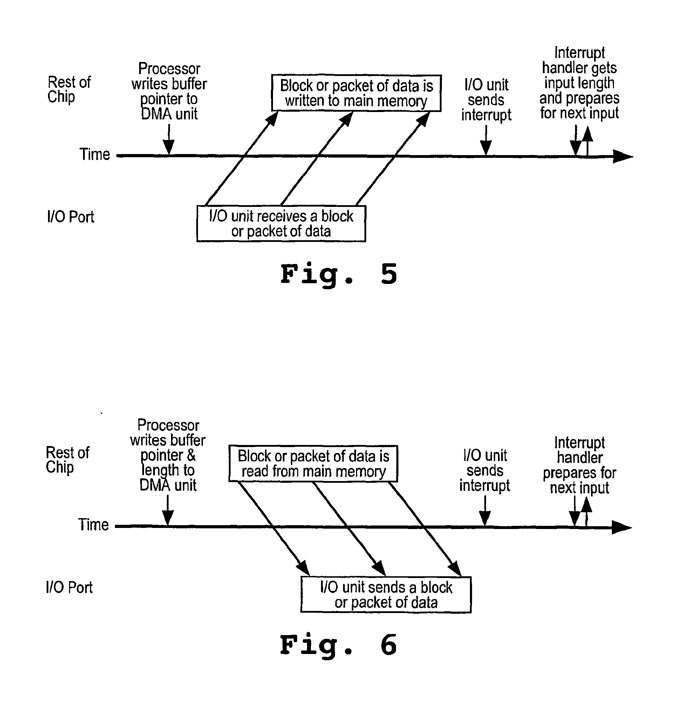

Figure 5 illustrates an exemplary Input timeline for the use of the I/O port interface in accordance with one embodiment of the invention. In the Setup stage the processor configures the interface to receive data and the processor writes a buffer pointer to the DMA unit. In the Send/Receive stage, the I/O unit receives a block of data and the block of data is written to main memory. In the Cleanup stage the port sends an interrupt to the processors, invoking an I/O handler. The interrupt handler obtains the input length and prepares for the next input here also.

Figure 6 illustrates an exemplary Output timeline for the use of the I/O port interface in accordance with one embodiment of the invention. Here, the timeline follows the three stages discussed above with the variations incorporated for the output process as depicted in Figure 6.

In summary, the above described embodiments provide exemplary architecture schemes for the multi-thread multi-core processors. The architecture scheme presents a cache bank interface unit and an I/O port interface unit. These architecture schemes are configured to handle the bandwidth necessary to accommodate the multi-thread multi-core processor configuration as described herein.

Furthermore, the invention may be practiced with other computer system configurations including hand-held devices, microprocessor systems, microprocessor-based or programmable consumer electronics, minicomputers, mainframe computers and the like. The invention may also be practiced in distributing computing environments where tasks are performed by remote processing devices that are linked through a network.

With the above embodiments in mind, it should be understood that the invention may employ various computer-implemented operations involving data stored in computer systems. These operations are those requiring physical manipulation of physical quantities. Usually, though not necessarily, these quantities take the form of electrical or magnetic signals capable of being stored, transferred, combined, compared, and otherwise manipulated. Further, the manipulations performed are often referred to in terms, such as producing, identifying, determining, or comparing.

Any of the operations described herein that form part of the invention are useful machine operations. The invention also relates to a device or an apparatus for performing these operations. The apparatus may be specially constructed for the required purposes, or it may be a general purpose computer selectively activated or configured by a computer program stored in the computer. In particular, various general purpose machines may be used with computer programs written in accordance with the teachings herein, or it may be more convenient to construct a more specialized apparatus to perform the required operations.

Although the foregoing invention has been described in some detail for purposes of clarity of understanding, it will be apparent that certain changes and modifications may be practiced within the scope of the appended claims. Accordingly, the present embodiments are to be considered as illustrative and not restrictive, and the invention is not to be limited to the details given herein, but may be modified within the scope and equivalents of the appended claims.

***What is claimed is:***

## Claims

1. A processor chip, comprising:
a plurality of processing cores (118), each of the processing cores being multi-threaded;
a plurality of cache bank memories (122), each of the cache bank memories including
a tag array region (150) configured to store data associated with each line of the cache bank memories,
a data array region (152) configured to store the data of the cache bank memories,
an access pipeline (170-176) configured to handle accesses from the plurality of processing cores, and
a miss handling control unit (164) configured to control the sequencing of cache-line transfers between a corresponding cache bank memory and a main memory;
a crossbar enabling communication between the plurality of processing cores and the plurality of cache bank memories; and
a plurality of input/output, "I/O", interface modules (110) in communication with a main memory interface (126) and providing a link to the plurality of processing cores, the link bypassing the plurality of cache bank memories and the crossbar.

2. The processor chip of claim 1, wherein interrupt requests from the I/O interface module are sent to the plurality of processing cores over the link.

3. The processor chip of claim 1, wherein each of the plurality of cache bank memories further include:
a first temporary staging buffer configured to store tag data associated with references to be fetched from memory; and
a second temporary staging buffer configured to store tag data associated with references leaving the corresponding cache bank.

4. The processor chip of claim 1 wherein the access pipeline includes four stages.

5. The processor chip of claim 4 wherein the four stages are selected from the group consisting of, a Tag read 1 stage, a Tag read 2 stage, a Data 1 and Tag write stage, and a Data 2 stage.

6. The processor chip of claim 5, wherein during the Tag read 1 stage an index portion of an access address is analyzed to access corresponding tag data stored in the tag array region.

7. The processor chip of claim 1, wherein the miss handling control unit is invoked when cache misses occur.

8. A server, comprising an application processor chip, the application processor chip being a processing chip according to any one of the preceding claims, wherein the plurality of processing cores are located in a center region of the processor chip.

## Patentansprüche

1. Prozessorchip, der Folgendes umfasst:
mehrere verarbeitende Kerne (118), wobei jeder der verarbeitenden Kerne mehrere Stränge aufweist; mehrere Cache-Bank-Speicher (122), wobei jeder der Cache-Bank-Speicher Folgendes enthält:
ein Tag-Array-Gebiet (150), das konfiguriert ist zum Speichern von Daten, die mit jeder Zeile der Cache-Bank-Speicher assoziiert sind,
ein Datenarray-Gebiet (152), das konfiguriert ist zum Speichern der Daten der Cache-Bank-Speicher,
eine Zugangspipeline (170-176), die konfiguriert ist zum Verarbeiten von Zugängen von den mehreren verarbeitenden Kernen, und
eine Miss-Handling-Steuereinheit (164), die konfiguriert ist zum Steuern des Sequenzierens von Cache-Line-Transfers zwischen einem entsprechenden Cache-Bank-Speicher und einem Hauptspeicher; eine Kreuzschiene, die eine Kommunikation zwischen den mehreren verarbeitenden Kernen und den mehreren Cache-Bank-Speichern ermöglicht; und
mehrere Eingangs-/Ausgangs-Schnittstellenmodule ("E/A-Module") (110) in Kommunikation mit einer Hauptspeicherschnittstelle (126) und eine Verbindung zu mehreren verarbeitenden Kernen bereitstellend, wobei die Verbindung die mehreren Cache-Bank-Speicher und die Kreuzschiene umgehen.

2. Prozessorchip nach Anspruch 1, wobei Unterbrechungsanforderungen von dem E/A-Schnittstellenmodul über die Verbindung zu den mehreren verarbeitenden Kernen geschickt werden.

3. Prozessorchip nach Anspruch 1, wobei jeder der mehreren Cache-Bank-Speicher weiterhin Folgendes enthält:
einen ersten temporären Einspeicherungspuffer, der konfiguriert ist zum Speichern von mit vom Speicher zu holenden Referenzen assoziierten Tag-Daten; und
einen zweiten temporären Einspeicherungspuffer, der konfiguriert ist zum Speichern von mit die entsprechende Cache-Bank verlassenden Referenzen assoziierten Tag-Daten.

4. Prozessorchip nach Anspruch 1, wobei die Zugangspipeline vier Stufen enthält.

5. Prozessorchip nach Anspruch 4, wobei die vier Stufen ausgewählt sind aus der Gruppe bestehend aus einer Tag-Lese-1-Stufe, einer Tag-Lese-2-Stufe, einer Daten-1- und Tag-Schreib-Stufe und einer Daten-2-Stufe.

6. Prozessorchip nach Anspruch 5, wobei während der Tag-Lese-1-Stufe ein Indexabschnitt einer Zugangsadresse analysiert wird, um auf in dem Tag-Array-Gebiet gespeicherte entsprechende Tag-Daten zuzugreifen.

7. Prozessorchip nach Anspruch 1, wobei die Miss-Handling-Steuereinheit aufgerufen wird wenn Cache-Misses auftreten.

8. Server, der einen Applikationsprozessorchip umfasst, wobei der Applikationsprozessorchip ein verarbeitender Chip nach einem der vorhergehenden Ansprüche ist, wobei sich die mehreren verarbeitenden Kerne in einem Mittelgebiet des Prozessorchips befinden.

## Revendications

1. Puce microprocesseur, comprenant :
une pluralité de coeurs de traitement (118), chacun des coeurs de traitement étant à multi-fil d'exécution ;
une pluralité de mémoires à bancs de caches (122), chacune des mémoires à bancs de caches comportant
une région de matrice d'étiquettes (150) conçue pour stocker des données associées à chaque ligne des mémoires à bancs de caches,
une région de matrice de données (152) conçue pour stocker les données des mémoires à bancs de caches,
un pipeline d'accès (170-176) conçu pour gérer les accès depuis la pluralité de coeurs de traitement, et
une unité de commande de gestion de défauts (164) conçue pour commander le séquencement de transferts de lignes de caches entre une mémoire à bancs de caches correspondante et une mémoire principale ;
un crossbar permettant les communications entre la pluralité de coeurs de traitement et la pluralité de mémoires à bancs de caches ; et
une pluralité de modules d'interface entrée/sortie, "I/O", (110) en communication avec une interface de mémoire principale (126) et fournissant un lien avec la pluralité de coeurs de traitement, le lien contournant la pluralité de mémoires à bancs de caches et le crossbar.

2. Puce microprocesseur selon la revendication 1, dans laquelle des demandes d'interruption issues du module d'interface I/O sont envoyées à la pluralité de coeurs de traitement par le lien.

3. Puce microprocesseur selon la revendication 1, dans laquelle chacune de la pluralité de mémoires à bancs de caches comporte en outre :
un premier tampon de transfert temporaire conçu pour stocker des données d'étiquettes associées à des références à récupérer en mémoire ; et
un deuxième tampon de transfert temporaire conçu pour stocker des données d'étiquettes associées à des références quittant le banc de caches correspondant.

4. Puce microprocesseur selon la revendication 1, dans laquelle le pipeline d'accès comporte quatre étapes.

5. Puce microprocesseur selon la revendication 4, dans laquelle les quatre étapes sont sélectionnées parmi le groupe constitué par une étape lecture d'Etiquettes 1, une étape lecture d'Etiquettes 2, une étape Données 1 et écriture d'Etiquettes et une étape Données 2.

6. Puce microprocesseur selon la revendication 5, dans laquelle, au cours de l'étape lecture d'Etiquettes 1, une partie index d'une adresse d'accès est analysée pour accéder à des données d'étiquettes correspondantes stockées dans la région de matrice d'étiquettes.

7. Puce microprocesseur selon la revendication 1, dans laquelle l'unité de commande de gestion de défauts est appelée lorsque surviennent des défauts de caches.

8. Serveur, comprenant une puce microprocesseur d'application, la puce microprocesseur d'application étant une puce microprocesseur selon l'une quelconque des revendications précédentes, la pluralité de coeurs de traitement étant implantés dans une région centrale de la puce microprocesseur.
